# EUROPÄISCHE PATENTSCHRIFT

(11) **EP 0 812 339 B1**
(45) Veröffentlichungstag und Bekanntmachung des Hinweises auf die Patenterteilung: **19.07.2000**
(21) Anmeldenummer: 96904085.6
(22) Anmeldetag: 29.02.1996
(51) Int. Cl.: C08J 5/22, B01J 41/12, B01D 71/82, B01D 71/52, B01D 53/22, B01D 61/36, B01D 61/02

(54) **STARK BASISCHE ANIONENAUSTAUSCHENDE FORMKÖRPER UND VERFAHREN ZU DEREN HERSTELLUNG**
STRONGLY BASIC ANION-EXCHANGING MOULDED BODIES AND A METHOD OF MANUFACTURING THE SAME
CORPS MOULES FORTEMENT BASIQUES ECHANGEURS D'ANIONS ET LEUR PROCEDE DE PRODUCTION

(30) Priorität: 01.03.1995 DE 19507104
(43) Veröffentlichungstag der Anmeldung: 17.12.1997
(73) Patentinhaber: Altmeier, Patrick, 66822 Lebach (DE)
(72) Erfinder: Altmeier, Patrick, 66822 Lebach (DE)
(86) Internationale Anmeldenummer: EP9600825
(87) Internationale Veröffentlichungsnummer: WO9626971

(56) Entgegenhaltungen:
- DE-A- 4 026 154
- DE-A- 4 328 226
- DE-B- 1 020 600
- FR-A- 1 274 572
- US-A- 2 862 894
- US-A- 2 898 310
- US-A- 5 137 925

## Beschreibung

### Technisches Gebiet

Die Erfindung betrifft neue, stark basische anionenaustauschende Formkörper, außer Anionenaustauschermembranen, und ein Verfahren zu deren Herstellung. Diese Anionenaustauscher bestehen aus einem Polymersystem, das durch seine besondere Verarbeitbarkeit und mechanischen Eigenschaften die Herstellung von Fasern, Matten, kompakten Körpern, Kugeln usw. erlaubt.

Ionenaustauscher werden zum Austausch von Ionen in Lösungen verwendet. Weiterhin werden sie in der Elektrophorese und der lonenchromatographie als Trägermaterial eingesetzt. In Form von Folien gelangen sie als lonenaustauschermembranen in den Handel.

### Stand der Technik

Anionenaustauscher werden heute meist auf Basis von Styrol-Copolymeren hergestellt. Neben Styrol als Matrixpolymer können auch Polysulfone, Polyethersulfone oder auch Poly-(vinylpyridin)-derivate verwendet werden. Diese Materialien haben den Nachteil, daß sie nicht ohne weiteres in Form dünner flexibler Schichten oder kompakten Formkörpern hergestellt werden können. Zudem muß zumeist für die Herstellung der Polymere auf Chlormethyl-methylether zurückgegriffen werden, welcher sehr toxisch ist.

Es sind weiterhin Anionenaustauscher (z.B. DD 301 541) bekannt, die auf Polyvinylalkohol gebundene Alklylidenepoxide enthalten, welche durch Reaktion von Epichlorhydrin mit sekundären oder tertiären Aminen entstehen. Diese Anionenaustauscher können jedoch nur in Form von Kugeln hergestellt werden. Zudem ist die chemische Beständigkeit gegenüber Säuren und Basen aufgrund des Gehaltes polyhydroxylierter Polymere unbefriedigend.

Daher ist die Verwendung von Polyepichlorhydrin als Basispolymer von Vorteil, da dieses eine hohe chemische Beständigkeit erwarten läßt. Eine Übersicht über den Stand der Technik findet man z. B. in Advances in Polymer Science 70 (1985), Key Polymers S. 92 f. Es tritt bei Verwendung dieses Basispolymersystems das Problem auf, daß nur schwach basische Anionenaustauscher hergestellt werden können. Dieses Problem wird auch bei der Herstellung von analog aufgebauten Polyelektrolyten aus Polyepichlorhydrin und tertiären Aminen deutlich, wo die Reaktion auf oligomeres Polyepichlorhydrin limitiert ist.

Aus DE 4328226 sind Anionenaustauschermembranen auf Basis von Reaktionsprodukten von Polyepichlorhydrin und tertiären Aminen bekannt. Diese Membranen können jedoch nur als dicke, kompakte Filme hergestellt werden. Die Herstellung von Formkörpern oder die Herstellung von sehr dünnen Filmen, wie sie für Trennschichten benötigt werden, ist jedoch nicht möglich.

### Darstellung der Erfindung

Aufgabe dieser Erfindung ist ein universell einsetzbarer stark basischer Anionenaustauscher, der
1. in beliebigen physikalischen Formen (z.B. in Blockform, als Beschichtung auf Trägermaterialien, zum Verkleben von Körpern) hergestellt werden kann,
2. stark basisch ist, ohne daß die Verwendung von toxischen chlormethylierenden Substanzen notwendig ist,
3. chemisch stabil (insbesondere gegenüber hohen und niedrigen pH-Werten und gegenüber Oxidationsmitteln) ist,
4. dessen mechanische Stabilität befriedigend ist und
5. billig und einfach herstellbar ist.

Es wurde gefunden, daß eine Lösung von Umsetzungsprodukten von Polyepihalohydrinen mit tertiären Aminen, vorzugsweise 1,4-Diazabicyclo-(2,2,2)-octan, in dipolar aprotischen Lösemitteln, gegebenenfalls mit geeigneten Inertpolymeren und/oder Weichmachern, durch verschiedene Verfahren zu einem Anionenaustauscher verfestigt werden kann, so daß eine Vielzahl von Formkörpern hergestellt werden kann.

Die Verwendung der erfindungsgemäßen Komponenten löst dabei überraschend die bekannten Probleme zur Herstellung von Formkörpem aus lonenaustauscherpolymeren, da das Polymersystem erfindungsgemäß nach verschiedenen Methoden verarbeitet werden kann.

Zunächst besteht die Möglichkeit, eine Gußform mit der Gießlösung auszufüllen und das Lösemittel anschließend abzudampfen. Diese Methode beschränkt sich auf die Herstellung großflächiger flache Formkörper, z.B. Matten oder Fasern, welche keine abstehenden Oberflächenkonturen besitzen. Sie läßt sich auf Körper mit Oberflächenkonturen ausweiten, wenn man der Gießlösung Weichmacher hinzugibt, die während des Abdampfens das Volumen des später inkorporierten Wassers ausfüllen.

Zur Herstellung kompakter dicker Körper, kann die Gießlösung mittels eines geeigneten Koagulans verfestigt werden. Dies geschieht am Besten dadurch, daß die Lösung in eine Form gegossen wird, und die Lösung anschließend mit dem Koagulans überschichtet wird. Während einer gewissen Zeit diffundiert das Koagulans in den Körper und verfestigt ihn dabei. Es kann dabei dem Koagulans ein Vernetzungsmittel, z.B. primäre Amine zugesetzt werden oder das Aktivpolymer wird in einem weiteren Schritt thermisch vernetzt.

Schließlich kann die Gießlösung auch z.B. durch Sprühen als sehr dünner Film auf ein Trägermaterial aufgetragen werden, so daß der lonenaustauscher als semipermeable Trennschicht dienen kann. Durch diese Formgebungsmöglichkeiten ergeben sich ein breites Anwendungsspektrum: Das Material kann insbesondere als Träger in der Gel-Elektrophorese, als Diaphragma in Brennstoffzellen, in Form genoppter Matten als Ionenleitfähige Spacer für die Elektrodialyse, als selektive Trennschicht für Gase und Flüssigkeiten und als Ionenleitfähiger Klebstoff verwendet werden. Zudem wurde überraschend gefunden, daß die oben beschriebenen Umsetzungsprodukte völlig neue Trenn-Eigenschaften besitzen und daher als Trennmaterial in der Gastrennung und Pervaporation eingesetzt werden kann.

### Wege zur Ausführung der Erfindung

Das Wesen der erfindungsgemäßen lonenaustauscher wird durch die Formgebungsmöglichkeiten, die sich durch die Kombination des reaktiven halogenhaltigen Polyethers und des Inertpolymers mit der Aminkomponente ergeben, bestimmt.

Als Reaktivkomponente kommen Polymere der Form

-[CR₁R₂ - CR₃R₄ - O]ₙ-

in denen mindestens einer der Reste R₁-R₄ eine CH₂Z Gruppe mit Z = Halogen ist, in Frage. Dies sind Polymere der Epihalohydrine, von 1,4-Dichlor-2,3-epoxibutan oder Copolymere der beiden oder Co- und Terpolymere mit Ethylenoxid. Aufgrund der technischen Verfügbarkeit von hochmolekularem Polyepichlorhydrin bzw. Copolymeren von Epichlorhydrin und Ethylenoxid bzw. Terpolymeren mit Epichlorhydrin, finden diese Polymere vorzugsweise Verwendung. Epibromhydrin und Epiiodhydrin können ebenso verwendet werden, sind aber aufgrund der hohen Kosten weniger interessant. Weiterhin können auch Polymere, z.B. Polyvinylalkohol, auf denen besagte Reaktivkomponenten aufgepfropft sind, verwendet werden.

Diese Reaktivkomponente erfüllt zunächst verschiedene grundsätzliche Vorbedingungen: Sie ist technisch gut verfügbar und die Herstellung benötigt keine Chlormethylierung als Verfahrensschritt, sie ist billig, sie ist rein aliphatisch aufgebaut, somit neigen daraus hergestellte Materialien nicht zu Verschmutzungen, und sie ist mit Inertpolymeren verarbeitbar, die bei anderen Grundpolymeren nicht verwendet werden können. Weiterhin besitzen die erfindungsgemäß verwendeten halogenierten Polymere eine wesentlich geringere Molmasse der monomeren Einheit gegenüber chlormethylierten Polystyrolen oder Polysulfonen. Die erreichbaren Festionenkonzentrationen im Material liegen also weitaus höher, da pro Gramm Polymer mehr reaktive Gruppen vorhanden sind.

Neben diesen günstigen Aspekten ist der wichtigste weitere Unterschied des hier verwendeten reaktiven Polymers zu anderen reaktiven Polymeren seine geringere Reaktivität mit tertiären Aminen, dem bei der Herstellung der erfindungsgemäßen Anionenaustauschern Rechnung getragen werden muß. Tertiäre Amine reagieren mit organischen Halogenverbindungen zu einem chemisch einheitlichen quartären Ammoniumsalz. Diamine vermögen mit beiden Aminogruppen an verschiedenen Molekülen zu reagieren, so daß bei Verwendung einer polymeren Halogenverbindung eine Vernetzung des Polymers gleichzeitig mit der Bildung der quartären Ammoniumionen möglich ist. Es ist daher ohne Beschränkung der Erfindung von Vorteil, tertiäre Diamine zur Quartämisierung und gleichzeitigen Vernetzung der erfindungsgemäß verwendeteten Polymere zu verwenden. Die physikalischen Eigenschaften der Amine müssen ebenso dem Verfahren angepaßt werden. Um ein Ionen-austauschermaterial leicht herstellen zu können, muß es möglich sein, daß Amin und halogenierter Polyether gemeinsam in der Gießlösung eingebunden sind. Trimethylamin ist bei Normalbedingungen ein Gas, so daß es bei einem derartigen Verfahren nicht verwendet werden kann.

Der Wahl des entsprechenden Amins und gegebenenfalls Inertpolymer kommt daher eine weitere Schlüsselfunktion zu, da das Amin auf aus den genannten Gründen einen entscheidenden Einfluß auf die Verarbeitbarkeit der Lösung hat.

Bei den erfindungsgemäß verwendeten Polymeren muß für die Quartämisierung der Amine eine gewisse Reaktionszeit mit einkalkuliert werden, in der Sorge getragen wird, daß das Amin nicht mit dem verwendeten Lösemittel verdampft. Dies wird in einfacher Art erreicht, indem man entweder das Dampfvolumen über dem Formkörper während der Reaktionszeit begrenzt oder einen entsprechenden Überschuß an Amin hinzugibt. Die erfindungsgemäße Verwendung von 1,4-Diazabicyclo-(2,2,2)-octan als Aminkomponente erweist sich als besonders vorteilhaft, da die chemischen und physikalischen Randbedingungen ideal erfüllt sind und die Verbindung für die Quartärnisierung des ersten Stickstoffatoms stark aktiviert ist. Andererseits erweist sich auch die oben genannte Maßnahme während der Reaktion und des Abdampfens des Lösemittels besonders bei Verwendung dieses Amins als wesentlich für das Gelingen guter lonenaustauscher, da dieses Amin besonders stark zum Verdampfen mit Lösemitteln, vorzugsweise DMF, neigt. Ebenso wurde gefunden, daß es von Vorteil ist, die Lösung bei erhöhter Temperatur, meist 80-120° C, vorreagieren zu lassen. Man erreicht somit eine ca. 10 bis 20%ige Vorsubstitution, ohne daß es in der Lösung zu einer Vernetzung des Polymers kommt. Man kann jedoch diese Substitution im voraus fast vollständig durchführen, indem im tertiären Di- oder Polyamin jede über eins gehende Aminogruppe geschützt wird oder das Amin in entsprechendem Überschuß zugibt. Weiterhin kann ein möglicherweise vernetztes Material, das einen relativ hohen Vorsubstitutionsgrad besitzt, mittels eines Ultraturax-Mixers wieder verflüssigt werden. Man erreicht so, daß das aktive Polymer mit der Aminkomponente reagiert. Dies ist insbesondere dann sehr wichtig, wenn angestrebt ist, in Mischung mit einem Inertpolymer einen Phaseninverisons-Formkörper herzustellen oder einen Film auf einem temperaturempfindlichen Trägermaterial aufzubringen.

Dieses derart umgesetzte Polymer stellt eine eigene Substanz dar. Ab einem Substitutionsgrad von ca 10% ist dieses Polymer wasserlöslich. Durch Zugabe der Aminkomponente im Überschuß kann so ein z.B. bis zu 60% substituiertes, unvemetztes Material erhalten werden und z.B. in Aceton ausgefällt und damit gereinigt werden. Das Polymer enthält in statistischer Verteilung zwei Komponenten und kann schematisch folgendermaßen dargestellt werden:

-[*CH*₂-*CH*(*CH*₂*Cl*)-*O*]_{*n*}-[*CH*₂-*CH*(*CH*₂*N*⁺(*C*₂*H*₄)₃*N*)-*O*]_{*m*}-

Es ist bifunktionell, da es neben den ursprünglichen Chlormethylgruppen auch quartäre Ammoniumionen enthält, welche über die an ihr enthaltene tertiären Aminfunktion intra- und intermolekular reagieren können. Der Anteil beider Komponenten und damit der Indices n und m kann wie oben beschrieben eingestellt werden, so daß Polymere mit unterschiedlicher Vernetzungsfähigkeit entstehen. Bei kleinen m- Werten vernetzt das Polymer bzw. deren Lösungen langsam bei Raumtemperatur. Daher müssen sie schnell verarbeitet werden. Ein Vorteil ist, daß diese Produkte, wenn sie z.B. zum Film verarbeitet wurden, vernetzen und dadurch ihre Form behalten. In einer weiteren Ausführungsform kann das aktive Polymer so weit umgesetzt werden, daß es keine nennenswert reaktiven Halogenatome mehr enthält. Dieses Polymer kann isoliert werden und neigt selbst nicht zum Vernetzen. Erst in Mischung mit weiterem, nicht reagiertem aktiven Polymer tritt Vernetzung ein. Man kann so diese beiden Komponenten mischen, die Lösung in die beabsichtigte Form bringen und dann die Vernetzungsreaktion abwarten. Es ist dabei günstig, die Mischung zu erwärmen. Im allgemeinen genügt eine Temperatur von 80° C, um eine Reaktion innerhalb weniger Stunden zu erreichen.

Eine Lösung des so erhaltenen Reaktionsprodukts z.B. in Methanol kann verwendet werden, um dünne Schichten dieses Materials zu erzeugen. Hierbei hat sich die Verwendung eines mikroporösen Trägermaterials zur Erzeugung von sehr dünnen Filmen als Vorteilhaft erwiesen. Diese Filme sind sehr hydrophil, quellen also in Wasser. Man kann sie somit verwenden, um aus organischen Lösemitteln Wasser mittels Pervaporation abzutrennen. Es wurde überraschend gefunden, daß man derartige Filme auch zur Abtrennung saurer Gase wie CO₂ oder H₂S - insbesondere wenn sie vorher in die Carbonat oder Sulfid-Form gebracht wurden - verwenden kann. Hierbei kommt die Tatsache zugute, daß es möglich ist, aufgrund der vorzüglichen Verarbeitbarkeit sehr dünne Schichten zu erzeugen.

Das isolierte, unvemetzte Reaktionsprodukt läßt sich auch als Ionenleitfähiger Kleber verwenden. In an sich bekannter Weise können so bipolare Membranen hergestellt werden, indem man Kationenaustauschermembranen und Anionenaustauschermembranen mit der Gießlösung verklebt, wie dies z.B. in DE-OS 3508206 beschrieben ist. Hier ergibt sich jedoch der Vorteil, daß das Polymer stark basisch ist und in der bipolaren Membran geladen voliegt, somit am lonentransport teilnimmt. Weiterhin ist der Kleber alkalistabil. Dies ist notwendig um eine dauerhafte Verklebung zu erreichen.

Erhitzt man ein isoliertes unvemetztes Reaktionsprodukt von Polyepichlorhydrin mit DABCO, so erhält man einen festen, in Wasser quellenden lonenaustauscher mit einer hohen Festionenkonzentration. Der lonenaustauscher zeichnet sich durch eine hohe Alkalistabilität und eine geringe Oxidationsempfindlichkeit aus. Aufgrund der geringen Quellung eignet er sich besonders für Standard-Aufgaben wie die Entsalzung von wässrigen Lösungen. Desweiteren besitzt er eine Affinität zu Sulfat-Anionen. Ist diese Selektivität unerwünscht, eignet sich Poly-epichlorhydrin-co-ethylenoxid als Aktivkomponente. Anionenaustauscher auf dieser Basis haben eine geringere Sulfataffinität.

Durch Einarbeiten eines Inertpolymers läßt sich das Eigenschaftsprofil derartiger Materialien noch weiter variieren. Es besteht bei erfindungsgemäßer Verwendung von Polyepichlorhydrin oder Copolymeren die zusätzliche Möglichkeit, Inertpolymere in die Substanz einzubinden, die vorher nicht einbindbar waren. Daher lassen sich mit diesem andere Polymermischungen herstellen als mit dem ursprünglichen halogenierten Polyether, welche weitere Variationsmöglichkeiten zulassen, da die mechanischen Eigenschaften der lonenaustauscher durch die Inertkomponente wesentlich bestimmt werden. Als Inertpolymere geeignet sind in DMF, N-Methylpyrrolidon oder Cyclohexanon lösliche Polymere wie z.B. Polysulfon, Polyethersulfon, Polyvinilydenfluorid, Polyvinylchlorid, Polymethacrylnitril, Polyacrylnitril (PAN) oder Copolymere der entsprechenden Monomere.

Überraschend wurde gefunden, daß sich, insbesondere mit frisch hergestellten Polysulfonlösungen, Mischungen herstellen lassen, die sich sehr gut eignen, mikroporöse Formkörper herzustellen, indem man die Mischung in die gewünschte Form gießt und anschließend die Form mit Wasser überschichtet. Es bildet sich an der Grenzfläche zur Polymerlösung eine Schicht ausgefallenen Polymers. Diese Schicht wird im Laufe von mehreren Stunden oder - je nach Tiefe der Form - Tagen dicker und beinhaltet schließlich die gesamte Form. Diese an sich bekannte Phaseninversion führt zu einem kompakten Körper, der in Wasser quillt. Es lassen sich nicht nur dünne Filme herstellen, sondern auch bis zu 3 cm tiefe Formkörper, die in der Elektrophorese als Festelektrolyt sehr hoher Kapazität eingesetzt werden können oder Körper mit nicht ebenem Profil. Um als Gelkörper in der Elektrophorese verwendet werden zu können ist es insbesondere von Vorteil, Poly-(epichlorhydrin-co-ethylenoxid) als Aktivpolymer zu verwenden, da dieses Polymer aufgrund seiner hohen intramolekularen Festionenabstände besonders gut geeignet ist, große Anionen durch die Matrix permeieren zu lassen.

Eine besondere Anwendungsmöglichkeit ergibt sich durch die Herstellung von genoppten Matten, die als Spacer in der Elektrodialyse verwendet werden können. Durch die Ionenleitfähigkeit besitzen diese die Eigenschaft, den elektrolytischen Widerstand der Kammer stark herabzusetzen und dadurch eine weitgehende Entsalzung erst zu ermöglichen. Durch Variation der Gußform können diese Matten so optimiert werden, daß sie den in der Elektrodialyse erforderlichen Strömungsverhältnissen in der Zelle genügen.

Diese Matten können auch durch Abdampfen der Gießlösung gefertigt werden, wenn man der Gießlösung einen Weichmacher zusetzt. Dieser hat die Aufgabe, den Quellungsgrad der Matte vorwegzunehmen. Er darf bei den Abdampfbedingungen nicht verdamfen und muß, wenn die Matte gequollen wird, sich im Quellungsmedium, z.B. Wasser, lösen. Dadurch wird während des Quellens der Weichmacher herausgelöst und durch Wasser ersetzt. Die Matte bleibt dadurch in ihrer Form unverändert, so daß profilförmige Körper aus der Form schadlos entnommen werden können. Als Weichmacher kommen daher alle in Wasser löslichen, nichtflüchtigen Verbindungen in Frage, insbesondere Polyvinylalkohol, Polyethylenglykol und seine Ether, Polyvinylpyrrolidon und Polyvinylamid. Der notwendige Zusatz von Weichmacher muß experimentell für jede Gießlösung bestimmt werden. Es läßt sich auch der gleiche Effekt erreichen, indem man das Lösemittel nur teilweise, d. h. soweit verdunstet, daß der entstehende Körper in Wasser nicht mehr quillt.

Mit PAN lassen sich Mischungen mit Polyepichlorhydrin in jedem Verhältnis erhalten. Der Zusatz weiterer primärer, sekundärer oder tertiärer Amine kann von großem Vorteil sein, um die Festionenkonzentration weiter zu erhöhen oder eine gewisse Erhöhung der Vernetzung zu bewirken.

Weiterhin lassen sich auch Filme durch Ausstreichen oder -sprühen der Lösung erhalten. Trägt man diese auf einem Träger auf, z.B. einer asymmetrischen Ultrafiltrationsmembran, können die Filme sehr dünn gestaltet werden. Auf diese Weise erhält man für selektive Trennschichten geeignete Formkörper, die z.B. in der Pervaporation, der Gastrennung, der Umkehrosmose, der Dialyse, der Piezodialyse usw. eingesetzt werden können. Hier ergibt sich auch die vorteilhafte Möglichkeit, Weichmacher in das selektive Trennmaterial einzuarbeiten. Auf diese Weise kann das Eigenschaftsprofil weiter variiert werden.

Eine weitere Ausführungsform der Erfindung sind dünne Matten, die mit einer Metallschicht auf einer oder beiden Seiten überzogen sind. Die Matten werden wie oben beschrieben hergestellt. Ihre Oberfläche kann glatt oder mit einem Profil versehen sein. Zum Aufbringen der Metallschicht kann man sich der Ionenleitfähigkeit des Materials bedienen und z.B. wie in Denki-Kagaku-oyobi-Kogyo-Butsuri-Kagaku, Bd. 62(5) 1994 S. 425-433 beschrieben, verfahren. Derartige Filme können z.B. als Diaphragmen in Brennstoffzellen verwendet werden. Es kann z.B. durch Aufbringen von Nickel ein System erzeugt werden, das es erlaubt, kohlenstoffhaltige Brennstoffe, z.B. Methanol, elektrochemisch zu oxidieren. In einem solchen anionenaustauschenden System ergibt sich als wesentlicher Vorteil gegenüber kationenaustauschenden Systemen die Möglichkeit, als Anodenmaterial billiges Nickel anstelle von Platin zu verwenden. Vorteil der erfindungsgemäßen Matten gegenüber üblichen lonenaustauschermembranen ist die hier erreichbare Alkalistabilität, die notwendig ist, da die in alkalischen Brennstoffzellen transportierten Ionen Hydroxidionen sind und die Möglichkeit, ein rauhes Oberflächenprofil und sonst größere Oberflächen pro Volumeneinheit zu erzeugen.

### Bester Weg zur Ausführung der Erfindung

Unter Beachtung der bisherigen Ausführungen und ohne hiermit Beschränkungen vorzunehmen, verfährt man am besten so, daß man zu einer Lösung des aktiven Polymers die Aminkomponente, vorzugsweise 1,4-Diazabicyclo-(2,2,2)-oktan in Substanz oder Lösung, in einem Massenverhältnis Reaktivpolymer - Amin von vorzugsweise 1 : 1 - 2,5 gibt, dann eine Lösung des Inertpolymers und gegebenenfalls eines Weichmachers zufügt und die Lösung anschließend auf 50 - 100° C erwärmt, bis sich die Viskosität der Lösung merklich zu erhöhen beginnt. Die optimalen Temperaturen und Zeiten für diesen Schritt hängen von der jeweiligen Zusammensetzung und Konzentration ab und müssen jedesmal experimentell bestimmt werden. Typische Werte sind jedoch 70 - 90° C und 2 - 12 h. Ebenso ist das beste Verhältnis Reaktivpolymer - Amin jeweils experimentell abzustimmen. Typische Konzentrationen für die verwendeten Polymerlösungen liegen bei 10 - 15 %. Anschließend können weitere Aminkomponenten oder weiteres aktives Polymer zugegeben werden. Die so hergestellte Gießlösung ist das Ausgangsprodukt zur Herstellung der Formkörper.

Zur Herstellung der Anionenaustauscher in Form von Kugeln oder Pulver arbeitet man am besten ohne Zusatz von Inertpolymer. Man mischt eine Lösung des Reaktivpolymers mit dem Amin, erhitzt diese Lösung wie oben beschrieben bis kurz vor dem Gelpunkt und rührt die erhaltene Lösung in an sich bekannter Weise in einem nicht-Lösemittel, z.B. Cyclohexan oder Paraffinöl unter erwärmen auf. Die beim Aufrühren entstehenden Polymertropfen verfestigen sich dann mit der Zeit und können anschließend als lonenaustauscher isoliert werden.

### Beispiele

1. Es wird eine Lösung A hergestellt, indem man 20g Polyepichlorhydrin in 80g DMF löst. Es wird eine Lösung B hergestellt, indem man 12g PAN in 88g DMF löst. Es wird eine Lösung C hergestellt, indem man 12,25g 1,4-Diazabicyclo-(2,2,2)-oktan in 88g DMF löst.
   Es werden 1 ml Lösung A, 5 ml Lösung B und 1,2 ml Lösung C 30 Minuten auf ca. 80° C erwärmt und durch Rühren mit einem Magnetrührer gemischt.
   Diese Lösung wird in ein Becherglas gegossen, in dem es den Boden ca. 10 mm bedeckt. Es wird einige Tage der feuchten Raumluft ausgesetzt, bis die gesamte Masse zu einem gelblich-trüben Block durchreagiert hat. Dieser wird in Wasser so lange gewaschen, bis er DMF-frei ist. Er besitzt eine Eigenleitfähigkeit von 2 mS/cm.
2. Es wird eine Lösung hergestellt, indem man 100 ml Lösung A und 200 ml Lösung C mischt. Diese wird auf dem Ölbad auf 100° C erwärmt. Die Lösung wird zunächst viskos, beginnt zu gelieren und wird nach einiger Zeit trübe. Es scheidet sich das Reaktionsprodukt ab. Anschließend wird abgekühlt, die Masse aus dem Kolben gelöst und mit Wasser gewaschen. Es ist dabei hilfreich, die Masse im Kolben bereits in Wasser quellen zu lassen. Man erhält einen Anionenaustauscher, der in beliebiger Körnung hergestellt werden kann. Er besitzt eine lonenaustauscherkapazität von ca. 6 meq / g Polymer.
3. Es wird eine Lösung angesetzt, indem man 10 g Poly-(epichlorhydrin-co-ethylenoxid) in 90 g DMF löst. Zu dieser wird 12,3 g 1,4-Diazabicyclo-(2,2,2)-oktan gegeben und unter Rühren auf 70° C erwärmt, bis die Lösung merklich viskoser wird (ca. 10 Stunden). Diese Lösung wird in Aceton gegossen und vom ausgefallenen Polymer dekantiert. Dieses wird mehrmals mit Aceton gewaschen und schließlich in Methanol gelöst. Mit dieser Lösung wird auf einer Ultrafiltrationsmembran ein dünner Film aufgebracht und das Methanol verdunstet. Sodann wird diese Composite-Membran im Trockenschrank bei 75°C 3 h erwärmt.
   Die so hergestellte Membran zeigt einen Trennfaktor Alpha (CH₄/0₂) = 1,5 bei einem Fluß von 0,37 ml/(s bar cm²)CH₄. Es ergibt sich ein Trennfaktor Alpha (N₂/O₂) = 1,6.
4. Auf eine Polypropylen-Platte, auf welcher ein hexagonales Muster von 1 mm tiefen Bohrungen von 3 mm Durchmesser im Abstand von 6 mm vorhanden ist, wird eine Gießlösung wie in Beispiel 1 beschrieben, gegossen. Diese Lösung wird mit Wasser überschichtet und so lange gewartet, bis die entstehende Matte koaguliert ist. Sie wird sodann abgezogen und als Spacer in einem Elektrodialyse Zellpaket verwendet.
   Dazu wird in einer konventionellen Elektrodialyse-Anordnung, wie sie z.B. in Chemio-Ing.-Techn. 47 (1975) S. 914 ff beschrieben ist, diese Matte im Diluat anstelle der sonst verwendeten Spacer eingebaut.
   Als Konzentrat wird eine 1 N Natriumcarbonatlösung und als Diluat eine 0,05 N Natriumcarbonatlösung vorgelegt. Das Konzentrat wird wie bei einer gewöhnlichen Elektrodialyse umgewälzt, der Diluatkreislauf wird mit einer Drossel versehen und der Auslauf aufgefangen und auf die Leitfähigkeit untersucht.
   Es ergibt sich ein Spannungsabfall von 18 V pro sich wiederholender Einheit bei einer Stromdichte von 0,17 kA m⁻². Das Produkt enthält 54 mg / l Natriumcarbonat. Der Fluß beträgt 480 l m⁻² h⁻¹.
5. Es wird ein Elektrodialyseversuch, wie in Beispiel 4 beschrieben, mit dem Unterschied, daß statt dem ionenleitfähigen Spacer ein Spacer aus Polyester verwendet wird.
   Es ergibt sich ein Spannungsabfall von 24 V pro sich wiederholende Einheit bei einer Stromdichte von 0,17 kA m⁻². Das Produkt enthält 108 mg / l Natriumcarbonat. Der Fluß beträgt 420 l m⁻² h⁻¹.
6. Eine Matte wie in Beispiel 4 hergestellt, wird zwischen zwei Kammern eingespannt, die durch die Membran getrennt sind. In die eine wird eine 0,1 N NiCl₂-Lösung gegeben, in die andere eine 0,1 N NaBH₄-Lösung. Nach etwa 30 min. hat sich auf der Nickelseite ein grauer Niederschlag von Nickel gebildet. Diese Prozedur wird wiederholt nachdem die Matte umgedreht wurde. Dadurch ist eine beidseitig mit Nickel überzogene Matte entstanden.
   Als Elektrodenableitung wird beiderseits ein Platinnetz aufgelegt und in eine Apparatur gespannt, in der der Elektroden-lonenaustauscher-Verbund mit einer 0,1 N NaBH₄-Lösung kontaktiert werden kann. Die andere Elektrodenseite liegt an der Luft und dient als Sauerstoffkathode. Man mißt zwischen beiden Elektroden ein Mischpotential von 0,72 V.
7. Die in Beispiel 3 hergestellte Lösung des umgesetzten Polymers in Methanol wird auf eine Kationenaustauschermembran (Typ: Neosepta CMX) ausgestrichen. Darauf wird eine Anionenaustauschermembran (Typ: Neosepta AMX) gelegt und auf die Kationenaustauschermembran aufgewalzt. Diese Membrananordnung wird in einer Elektrodialyseanordnung wie in DE-OS 3508206 beschrieben eingebaut und Strom durch die Apparatur geleitet. Beide Membranen verkleben durch den geflossenen Strom fest miteinander. Die entstehende bipolare Membran zeigt einen Spannungsabfall von 1,3 V bei einer Stromdichte von 1 kA m⁻².

## Patentansprüche

1. Anionenaustauschende Formkörper, außer Anionenaustauschermembranen, aus einer Lösung von
- Polymeren, die reaktive halogenhaltige funktionelle Gruppen enthalten und
- tertiären Aminen
erhältlich durch Abdampfen des Lösemittels oder durch Phaseninversion, dadurch gekennzeichnet, daß das Polymer, das reaktive halogenhaltige funktionelle Gruppen enthält, ein Epichlorhydrin-Polymer, insbesondere Polyepichlorhydrin, Epichlorhydrinkautschuk, Epichlorhydrin-Ethylenoxidcopolymer oder Epichlorhydrinterpolymer ist.

2. Anionenaustauschende Formkörper, außer Anionenaustauschermembranen, aus einer Lösung von
- Polymeren, die reaktive halogenhaltige funktionelle Gruppen enthalten und
- tertiären Aminen
erhältlich durch Abdampfen des Lösemittels oder durch Phaseninversion, dadurch gekennzeichnet, daß das Polymer, das reaktive halogenhaltige funktionelle Gruppen enthält, ein Epichlorhydrin-Polymer, insbesondere Polyepichlorhydrin, Epichlorhydrinkautschuk, Epichlorhydrin-Ethylenoxidcopolymer oder Epichlorhydrinterpolymer ist und daß der Gießlösung ein Weichmacher, insbesondere Polyvinylalkohol, Polyethylenglykol und seine Ether, Polyvinylpyrrolidon und Polyvinylamid, zugesetzt wird, der nach dem formgebenden Schritt herausgelöst wird.

3. Anionenaustauscher gemäß Anspruch 1 oder 2, dadurch gekennzeichnet, daß zu der Lösung aer beiden Komponenten ein Inertpolymer, insbesondere Polysulfon, Polyethersulfon, Polyvinylidenfluorid, Polyvinylchlorid, Polymethacrylnitril, Polyacrylnitril oder Copolymerer der entsprechenden Monomere zugesetzt werden.

4. Anionenaustauscher gemäß Anspruch 1 oder 2, dadurch gekennzeichnet, daß es sich bei dem tertiären Amin um 1,4-Diazabicyclo-(2,2,2)-oktan handelt.

5. Verwendung von Formkörpern gemäß Anspruch 1 oder 2 als Diaphragmen für Brennstoffzellen.

6. Verwendung von Formkörpern gemäß Anspruch 1 oder 2 als mikroporöses Substrat für die Gel-Elektrophorese.

7. Verwendung von Formkörpern gemäß Anspruch 1 oder 2 als selektive Schicht für Gastrennmembranen oder Pervaporationsmembranen.

8. Verwendung von Formkörpern gemäß Anspruch 1 oder 2 als Werkstoff zur Herstellung von geladenen Umkehrosmose-, Ultrafiltrations- und Mikrofiltrationsmembranen.

9. Verwendung von Formkörpern gemäß Anspruch 1 oder 2 als ionenleitfähige Verklebung von lonenaustauschermembranen.

## Claims

1. Anion exchangig molded bodies, except ion exchange membranes, produced from a solution of
- polymers containing reactive halogen-containing functional groups; and
- tertiary amines
by evaporation of the solvent or phase inversion characterized in that the polymer which contains reactive halogen-containing functional groups is a epichlorhydrin-polymer, in particular polyepichlorhydrin, epichlorhydrin rubber, epichlorohydrin-ethyleneoxide copolymers or terpolymers of epichlorhydrin.

2. Anion exchangig molded bodies, except ion exchange membranes, produced from a solution of
- polymers containing reactive halogen-containing functional groups; and
- tertiary amines
by evaporation of the solvent or phase inversion characterized in that the polymer which contains reactive halogen-containing functional groups is a epichlorhydrin-polymer, in particular polyepichlorhydrin, epichlorhydrin rubber, epichlorohydrin-ethyleneoxide copolymers or terpolymers of epichlorhydrin and that a softener, in particular polyvinylalcohol, polyethyleneglycol and his ethers, polyvinylpyrrolidone and polyvinylamide, is added to the solution, which is washed out after the form-giving step.

3. Anion exchanger according to claim 1 or claim 2, characterized in that a inert polymer such as polysulfone, polyether sulfone, polyvinylidenefluoride, polyvinylchloride, polymethacrylnitrile, polyacrylnitrile or copolymers of the said monomers is added to the solution of the two components.

4. Anion exchanger according to claim 1 or claim 2, characterized in that the tertiary amine is 1,4-diazabicyclo-(2,2,2)-octane.

5. Use of molded bodies according to claim 1 or claim 2 as diaphragms for fuel cells.

6. Use of molded bodies according to claim 1 or claim 2 as a microporous substrate for gel electrophoresis

7. Use of molded bodies according to claim 1 or claim 2 as a selective layer of gas separation membranes or pervaporation membranes.

8. Use of molded bodies according to claim 1 or claim 2 as material for the preparation of charged reverse osmosis, ultrafiltration and microfiltration membranes.

9. Use of molded bodies according to claim 1 or claim 2 as ion conducting glue for ion exchange membranes.

## Revendications

1. Corps moulés échangeurs d'ions, à l'exception de membranes échangeuses d'ions, à partir d'une solution
- de polymères, qui contiennent des groupes fonctionnels réactifs contenant de l'halogène et
- d'amines tertiaires,
obtenus par évaporation du solvant ou par inversion de phases, caractérisés en ce que le polymère, qui contient des groupes fonctionnels réactifs contenant de l'halogène, est un polymère d'épichlorhydrine, en particulier du polyépichlorhydrine, un caoutchouc d'épichlorhydrine, un copolymère d'épichlorhydrine et d'oxyde d'éthylène ou un terpolymère d'épichlorhydrine.

2. Corps moulés échangeurs d'ions, à l'exception de membranes échangeuses d'ions, à partir d'une solution
- de polymères, qui contiennent des groupes fonctionnels réactifs contenant de l'halogène et
- d'amines tertiaires,
obtenus par évaporation du solvant ou par inversion de phases, caractérisés en ce que le polymère, qui contient des groupes fonctionnels réactifs contenant de l'halogène, est un polymère d'épichlorhydrine, en particulier du polyépichlorhydrine, un caoutchouc d'épichlorhydrine, un copolymère d'épichlorhydrine et d'oxyde d'éthylène ou un terpolymère d'épichlorhydrine et en ce qu'on ajoute à la solution de coulée un plastifiant, en particulier un alcool polyvinylique, du polyéthylèneglycol et ses éthers, de la polyvinylpyrrolidone et du polyvinylamide, qui est éliminé après l'étape de moulage.

3. Echangeur d'anions selon la revendication 1 ou 2, caractérisé en ce qu'on ajoute à la solution des deux composants un polymère inerte, en particulier un polysulfone, un polyéthersulfone, un fluorure de polyvinylidène, un chlorure de polyvinyle, un polyméthacrylonitrile, un polyacrylonitrile ou des copolymères des monomères correspondants.

4. Echangeur d'anions selon la revendication 1 ou 2, caractérisé en ce que l'amine tertiaire est un 1,4-diazabicyclo-(2,2,2)-octane.

5. Utilisation des corps moulés selon la revendication 1 ou 2 comme diaphragmes pour des piles à combustible.

6. Utilisation des corps moulés selon la revendication 1 ou 2 comme substrat microporeux pour l'électrophorèse sur gel.

7. Utilisation des corps moulés selon la revendication 1 ou 2 comme couche sélective pour des membranes de séparation de gaz ou des membranes de perévaporation.

8. Utilisation des corps moulés selon la revendication 1 ou 2 comme matière de départ pour la fabrication de membranes chargées d'osmose inverse, d'ultrafiltration ou de microfiltration.

9. Utilisation des corps moulés selon la revendication 1 ou 2 comme adhésif conducteur d'ions de membranes échangeuses d'ions.
